# EUROPEAN PATENT SPECIFICATION

(11) **EP 3 664 987 B1**
(45) Date of publication and mention of the grant of the patent: **24.08.2022**
(21) Application number: 18843202.5
(22) Date of filing: 12.07.2018
(51) Int. Cl.: B29B 11/14, B29C 49/22, B29C 49/42, B31B 50/88, B65D 1/02, B29L 31/00, B29C 49/06, B29C 37/00, B29C 49/24

(54) **MOLDED ARTICLE, CONTAINER AND A METHOD FOR PRINTING THEREON**
GEFORMTER GEGENSTAND, BEHÄLTER UND VERFAHREN ZUM DRUCKEN DARAUF
ARTICLE MOULÉ, RÉCIPIENT ET MÉTHODE D'IMPRESSION SUR CELUI-CI

(30) Priority: 11.08.2017 US 201762544259 P
(43) Date of publication of application: 17.06.2020
(73) Proprietor: Husky Injection Molding Systems Ltd., Bolton, Ontario L7E 5S5 (CA)
(72) Inventor: GALT, John Robert, Bolton, Ontario L7E 5R7 (CA)
(74) Representative: HGF
(86) International application number: PCT/CA2018/050852
(87) International publication number: WO 2019/028545

(56) References cited:
- EP-A1- 0 766 546
- EP-B1- 0 766 546
- CA-A1- 2 854 929
- US-A- 4 861 620
- US-A- 5 928 842
- US-A- 5 928 842
- US-A1- 2007 218 227
- US-A1- 2008 048 368
- US-A1- 2010 009 171
- US-A1- 2010 206 762
- US-A1- 2017 072 733

## Description

### TECHNICAL FIELD

The present disclosure broadly relates to molded articles and containers formed by molding systems, and to method(s) for the printing and recycling thereof.

### BACKGROUND

Molding is a process by virtue of which a molded article can be formed from molding material by using a molding system. Various molded articles can be formed by using the molding process, such as an injection molding process. One example of a molded article that can be so formed includes a preform that is blow moldable into a container, such as, a bottle, can or the like. Such preforms are typically molded from a thermoplastic such as polyethylene terephthalate (PET) and are otherwise moldable from other thermoplastics such as, for example, high-density polyethylene (HDPE), or polypropylene (PP). Moreover, it is known to mold preforms having a multilayer structure for imparting desired properties to the container blow molded therefrom. As an example, it is known to provide a preform having a three layer construction wherein the inner and outer layers are formed of a common thermoplastic such as PET and the intermediate, or core layer, is formed from some other thermoplastic such as, for example, nylon, PolyGlycolide Acid (PGA), and Ethylene Vinyl Alcohol (EVOH), amongst many others. The foregoing construction provides advantages such as improved barrier resistance to the migration of gas and moisture through the thin wall of the container. In another example, the molded article may be a finished molded article, such as, for example, a cup, can, container or bottle without any subsequent operations for the remolding thereof.

Containers typically include printing for functional and/or decorative purposes. Functional markings may provide, for example, notice to a consumer as to the content of the container (e.g. product, volume, best before date, etc.), brand information (e.g. vendor name, product tradename), a source thereof (e.g. where made, bottled, etc.). Other functional markings may provide machine readable information such as, for example, a universal product code (i.e. UPC) to facilitate a purchase transaction and/or inventory management and container markings to denote the type(s) of material used in the construction thereof to facilitate post-consumer activity such as recycling. Decorative features may include, for example, colors and patterns. Some markings are both decorative and functional with familiar patterns and colors being used to convey brand information.

Such markings are typically printed onto labels and/or sleeves that are then applied to the container. It is also known to mark the container during the molding thereof with imprints made by engravings formed in a mold (e.g. injection mold, blow mold, etc.). Markings may also be formed directly onto the container in a post-molding operation using various techniques such as, for example, laser engraving.

Known methods and plastic compositions for container printing include the teachings set forth in the following patent publications.

EP766546 to Kimes discloses, amongst other things, flexible plastic labels which exhibit excellent ink-printability, excellent laser-imprintability and excellent mechanical properties are produced by incorporating a suitable laser-opaque material into the core layer of a multilayer coextrudate of the type previously used for labeling flexible plastic bottles.

WO2011115879 to Sarver discloses, amongst other things, polymer substrates are marked by a method in which certain graphite nanoplatelets are incorporated into the polymer composition, such as a coating or plastic article, prior to marking the composition by exposing selected portions of the substrate to a heat source, typically a laser.

US20060216441 to Schubel discloses, amongst other things, plastic molded bodies having two-dimensional or three-dimensional image structures produced in the interior through laser subsurface engraving. The plastic molded bodies are made of plastic materials which have a content of nanoscale metal oxides with both the plastic material and also the included metal oxide being transparent to the laser light used for producing the image structures.

US8318262 to Greb discloses, amongst other things, the use of spherical metal particles as a laser marking agent or laser weldability agent in a plastic.

US20170072733 to Trassl discloses, amongst other things, a thermoplastic or photo-sensitive replication lacquer layer, non-periodic randomly arranged (randomized) structures in the sub-micrometer range being incorporated into the replication lacquer layer and having an angle-independent optical effect, such as a color effect, and to a method for the production thereof and to the use thereof.

US4861620 to Azuma discloses, amongst other things, a pigment layer is provided on a surface of an article on which a marking is to be formed and is irradiated with patterned laser light to change internal molecular structure of pigment to thereby change its color. The marking can be multicolored by a suitable selection of pigment and laser energy density.

US5928842 to Shinmoto discloses, amongst other things, a polyolefin resin-based marking composition capable of developing a vivid color in dark brown to black on irradiation with laser beams, moldings of the composition, and a laser marking method. Three-dimensional moldings using the polyolefin resin-based laser marking composition can be produced by known methods including injection molding. Such three-dimensional moldings include containers such as multilayered containers.

JP5092657 to Ohachi discloses, amongst other things, a laser marking method for applying a sharp mark such as a character or a sign to the surface of a resin molded product or a molded product coated with a resin using laser beam, wherein the laser beam is applied to the surface of a molded product composed of a thermoplastic resin composition containing carbon black or to the surface of the molded product coated with the resin composition to perform marking.

US9429911 to Franken discloses, amongst other things, a method for marking an object during the production thereof.

US20100009171 to Greb discloses, amongst other things, the use of spherical metal particles as a laser marking agent or laser weldability agent in a plastic.

US20110089135 to Simon discloses, amongst other things, a polyethylene terephthalate container having a laser-formed area, wherein the laser-formed area is modified in response to radiation energy. In some embodiments, the laser-formed area of the container permitting localized contouring to permit or otherwise generally prevent flexural response to vacuum and/or loading forces. In some embodiments, the laser-formed area of the container comprises visible indicia formed to permit labeless containers.

US20060263554 to Yamada discloses, amongst other things, a plastic package which has a thin-film layered structure constituted of substances having different refractive indices and which is colored by an interference effect due to the thin-film layered structure. A decoration method is provided wherein portions having different optical characteristics are formed by mixing light/heat-absorbing fine particles with the above plastic package to disperse the fine particles therein, locally irradiating the package with a laser light to heat the light/heat-absorbing fine particles, and thereby vaporizing a resin surrounding the light/heat-absorbing fine particles to form voids.

Despite the availability of various label-less container printing techniques such methods have seen limited commercial adoption. As outlined below, the inventor has devised various practical improvements that will enable further adoption of such techniques.

### SUMMARY

In accordance with an aspect disclosed herein, there is provided a molded article for providing a container. The molded article comprising a body configurable to define a storage vessel of the container. The body includes a printing layer that is photo-sensitive to laser light of selected properties to change a visual appearance thereof, whereby the container may be printed upon.

In accordance with another aspect disclosed herein, there is provided a container. The container comprising a body configured to define a storage vessel. The body includes a printing layer that is photo-sensitive to laser light of selected properties to change a visual appearance thereof, whereby the container may be printed upon.

In accordance with a further aspect disclosed herein, there is provided a method for molding a container and printing thereon. The method comprising molding a molded article having a body that is configurable to define a storage vessel of the container, wherein the body includes a printing layer that is photo-sensitive to laser light of selected properties to change a visual appearance thereof. The method further comprising printing on the container with selective irradiation of the printing layer with the laser light.

In accordance with a yet another aspect disclosed herein, there is provided a non-transitory computer readable medium, the non-transitory computer readable medium storing computer executable instructions, which computer executable instructions when executed can cause a controller to execute the method for molding a container and printing thereon.

These and other aspects and features of non-limiting embodiments will now become apparent to those skilled in the art upon review of the following description of specific non-limiting embodiments in conjunction with the accompanying drawings.

### DESCRIPTION OF THE DRAWINGS

The detailed description of illustrative (non-limiting) embodiments will be more fully appreciated when taken in conjunction with the accompanying drawings, in which:
FIG. 1 depicts a molding system according to a non-limiting embodiment;
FIG. 2A depicts a non-limiting embodiment of a molded article that is moldable in a mold of the molding system of FIG. 1, the molded article configured as a preform of the type that is blow moldable to form a container;
FIG. 2B depicts an enlarged view of a wall portion of the molded article, preform, as indicated in FIG. 2A;
FIG. 2C depicts a non-limiting embodiment of a container that is blow moldable from the molded article, preform, as depicted in FIG. 2A;
FIG. 2D depicts an enlarged view of a wall portion of the container as indicated in FIG. 2C;
FIGS. 3A & 3B depict a non-limiting embodiment of a printing sequence of the container of FIG. 2C;
FIG. 4 depicts a non-limiting embodiment of a system for producing packaged products;
FIG. 5 depicts a non-limiting embodiment of a method for the molding the container of FIG. 2C and printing thereon;
FIG. 6 depicts another non-limiting embodiment of a molded article that is configurable to define a container;
FIG. 7 depicts a non-limiting embodiment of a container that is moldable from the molded article as depicted in FIG. 6;
FIG. 8-11 depict additional non-limiting embodiments of molded articles, preforms, that are configurable to define containers.

The drawings are not necessarily to scale and may be illustrated by phantom lines, diagrammatic representations and fragmentary views. In certain instances, details that are not necessary for an understanding of the embodiments or that render other details difficult to perceive may have been omitted.

### DETAILED DESCRIPTION OF THE NON-LIMITING EMBODIMENT(S)

Reference will now be made in detail to various non-limiting embodiments of a molding system, a molded article and various containers that are moldable therewith, at least in part, related methods for the molding and printing thereof as well as a non-transitory computer readable medium storing computer executable instructions that are executable to cause a controller of the molding system machine to execute the foregoing methods. It should be understood that other non-limiting embodiments, modifications and equivalents will be evident to one of ordinary skill in the art in view of the non-limiting embodiments disclosed herein and that these variants should be considered to be within scope of the appended claims. Furthermore, it will be recognized by one of ordinary skill in the art that certain structural and operational details of the non-limiting embodiments discussed hereafter may be modified or omitted (i.e. non-essential) altogether. In other instances, well known methods, procedures, and components have not been described in detail.

It is to be further expressly understood that the molding system, molded articles, containers and methods described herein are merely illustrative embodiments of the present technology. Thus, the description thereof that follows is intended to be only a description of illustrative examples of the present technology. This description is not intended to define the scope or set forth the bounds of the present technology. In some cases, what are believed to be helpful examples of modifications may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e. where no examples of modifications have been set forth), it should not be interpreted that no modifications are possible and/or that what is described is the sole manner of implementing that element of the present technology. As a person skilled in the art would understand, this is likely not the case. In addition it is to be understood that the molding system, molded article, containers and related may provide in certain instances simple embodiments of the present technology, and that where such is the case they have been presented in this manner as an aid to understanding. As persons skilled in the art would understand, various embodiments of the present technology may be of a greater complexity. Furthermore, where specific details of the different embodiments are presented with reference to discrete embodiments, a person skilled in the art is expected to combine specific embodiment details of one discrete embodiment with specific embodiment details of another discrete embodiment, even though such a combination may not be expressly disclosed herein below.

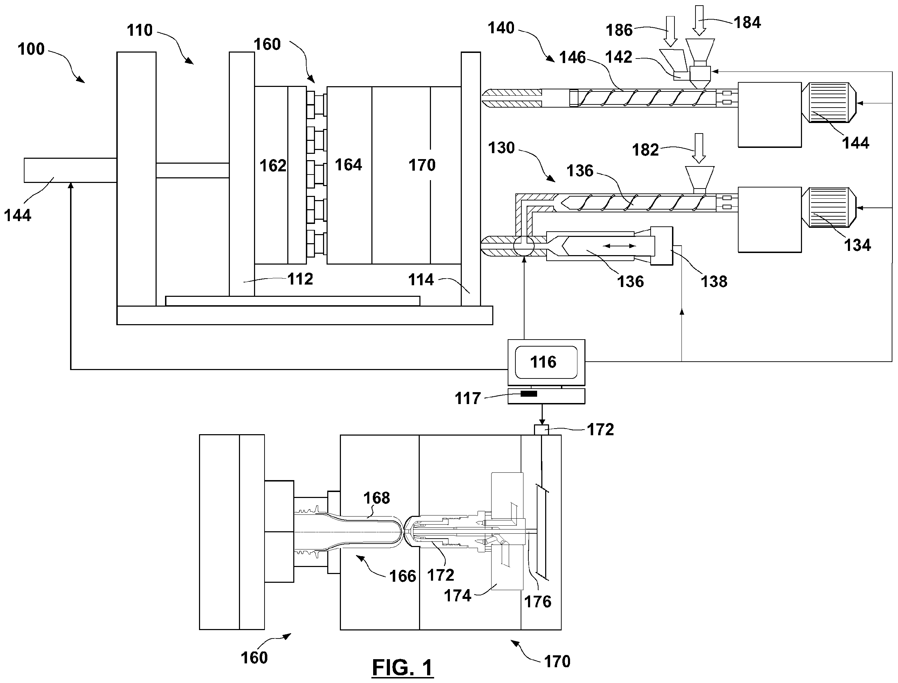

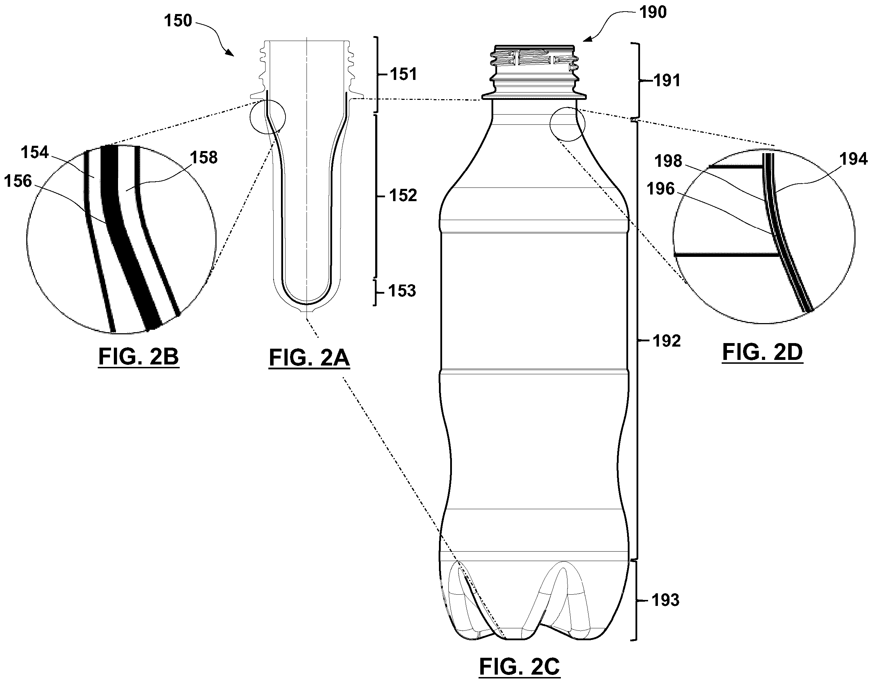

With reference to Figure 1, there is depicted a schematic representation of a non-limiting embodiment of a molding system 100. The molding system 100 is configured as an injection molding system that is capable of molding molded articles. A non-limiting example of a molded article 150 that is moldable in such a system is depicted with reference to FIG. 2A. The molded article 150 is a multilayer preform of the type that is re-moldable, in part, such as, for example, with blow molding, or with liquid molding and the like, into a container 190 as depicted with reference to FIG. 2C. The molding system 100 broadly includes a clamp 110, an injection unit 130, an auxiliary injection unit 140, a mold 160, and a controller 116.

The non-limiting embodiment of the clamp 110 includes, amongst other things, a stationary platen 114 and a moveable platen 112 that are supported on a base. In operation the moveable platen 112 is moveable relative to the stationary platen 114 by means of a clamp actuator 114 for opening, closing and otherwise clamping the mold 160. The clamp actuator 144 is connected to the controller 116 whereby the controller is able to control the operation thereof.

The non-limiting embodiment of the injection unit 130 includes, amongst other things, a plasticizer 136 and a separate shooting pot 136. As such the injection unit 130 is configured as a so-called two-stage injection unit that is capable of plasticizing during injection. The plasticizer 136 is operated by a plasticizing actuator 134 for plasticizing a first thermoplastic 182 therein. The shooting pot 136 is operated by an injection actuator 138 for injecting the first thermoplastic 182 into a hot runner 170 of the mold 160. The plasticizing actuator 134 and the injection actuator 138 are connected to the controller 116 whereby the controller is able to control the operation thereof.

Likewise, the non-limiting embodiment of the auxiliary injection unit 140 includes, amongst other things, a plasticizer 146 and a plasticizing/injection actuator 144. The injection unit 140 is configured as a reciprocating screw type injection unit. The plasticizer 146 is operated by the plasticizing/injection actuator 144 for plasticizing and injecting a second thermoplastic 186 into the hot runner 170 of the mold 160. The auxiliary injection unit further includes a blender or dosing device 142 at an inlet thereof. The blender or dosing device 142 is configured to blend or otherwise dose a flow of the second thermoplastic 186 with a photo-sensitive marker 186 that changes visual properties upon exposure to laser light of selected properties (i.e. wavelength, intensity, etc.). The extruder/injection actuator 144 and the blender or dosing device 142 are connected to the controller 116 whereby the controller is able to control the operation thereof.

The non-limiting embodiment of the mold 160 includes, amongst other things, a moveable part 163 and a stationary part 164 that may be arranged in a closed configuration, as shown, to define a molding cavity 168 therebetween and otherwise arranged in an open configuration, not shown, for removing/ejecting the molded article 150 therefrom. Accordingly, the moveable part 163 is coupled to the moving platen 112 of the clamp 110 whereas the stationary part 164 is coupled to the stationary platen 114 via a hot runner 170 that is disposed therebetween. The molding cavity 168 is defined by a mold stack 166 that includes a set of complimentary inserts that are arranged in the moveable and stationary parts of the mold 160. For purposes of a conceptual depiction of the mold only one mold stack 166 is shown whereas in practice the mold is likely to include a plurality thereof.

The hot runner 170 is configured to fluidly connect the injection unit 130 and the auxiliary injection unit 140 with the molding cavity 168. Without going into unnecessary detail already familiar to those of skill in the art, it should suffice to state that the hot runner 170 is typical in that it includes a nozzle 172, a manifold 174 and a nozzle valve assembly 176. The manifold 174 is arranged to connect the outlets of the injection units with inlets of the nozzle 172. The nozzle 172 is configured to split an inlet flow of the first thermoplastic 182 received from the injection unit 130, via the manifold 174, in a melted state and to direct the resulting flows towards inner and outer skin outlets (not numbered). The nozzle 172 is similarly configured to receive an inlet flow of the second thermoplastic 184 with the photo-sensitive marker 186 entrained therein, received from the auxiliary injection unit 140, via the manifold 174, in a melted state and to direct the resulting flow towards an intermediate outlet (not numbered) that is arranged between the skin outlet channels. The nozzle valve assembly 176 includes a valve actuator 172 that is connected to the controller whereby the controller is able to control the operation thereof. Through coordinated control of the injection unit 130, the auxiliary injection unit 140 and the nozzle valve assembly 176, amongst other controllable devices, injecting of the first thermoplastic 182 and the second thermoplastic 420 through selected outlets of the nozzle 172 and into the molding cavity 168 may be performed sequentially and/or simultaneously. By so doing a printing layer 156 (reference FIG. 2A and 2B), composed of the second thermoplastic 184 and the photo-sensitive marker 186, may be arranged in the molded article 150 in any desired location and distribution therein.

Within various embodiments of the present technology, the machine controller 116 can be implemented as a computing apparatus having a processor (not separately numbered). The processor may be provided through the use of dedicated hardware as well as hardware capable of executing software in association with appropriate software. The processor can execute one or more functions to control operations of one or more of the components of the molding machine 100. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included. The controller 116 has access to a memory (not depicted) that stores computer executable instructions 117, which computer executable instructions, when executed, cause the processor to control operation of one or more of the components of the molding machine 100.

Having outlined the structure and operation of the molding system 100 the description shall now turn to further describe the structure and related steps for molding various non-limiting embodiments of the molded article and container and for printing directly thereon.

With reference to FIG. 2A, 2B, 2C and 2D there is depicted the non-limiting embodiment of the molded article 150 and the container 190 formed therefrom as introduced previously. In the present embodiment the molded article 150 is a multilayer preform of the type that is molded to form the container in a secondary operation.

The molded article 150 broadly includes a body configurable to define a storage vessel of the container 190. The body is generally tubular with a neck portion 151 at an open end, a base portion 153 at a closed end and a body portion 152 defined therebetween. The body portion 152 and the base portion 153 are re-moldable to provide a corresponding body part 192 and base part 193 of the container 190 respectively having a printing layer 196 that is encapsulated by an outer skin layer 194 and an inner skin layer 198. The neck portion 151 of the molded article 150 is configured to define a corresponding neck part 191 of the container. The neck portion 151 is configured to be capped using a closure to enclose a volume defined within the container 190. In other embodiments, not shown, the molded article may define a finished container ready to be filled and capped (i.e. it does not require any post molding transformation through blow molding, liquid molding or the like).

The neck portion 151, the base portion 153 and the body portion 152 are formed, at least in part, from a first thermoplastic 182. The composition of the first thermoplastic is not particularly limited. Suitable thermoplastic for containers include, for example, polyethylene terephthalate, high-density polyethylene, or polypropylene.

In addition, at least one of the neck portion 151, the base portion 153 and the body portion 152 also includes a printing layer 156 along at least a part thereof that is formed from a second thermoplastic 184. The printing layer 156 is photo-sensitive such that its appearance (e.g. opacity, color, etc.) is changed (i.e. developed) on exposure to laser light of selected properties (i.e. wavelength, intensity, etc.). As such, the composition of the second thermoplastic 184 may be intrinsically photo-sensitive or it may carry an additive such as a photo-sensitive marker 186 therein. As best shown with reference to FIG. 2B, the printing layer is encapsulated on both sides by an inner skin layer 158 and an outer skin layer 154 of the first thermoplastic 182. In the non-limiting embodiment the printing layer 156 is configured to extend along both the body portion 152 and the base portion 153 so that with re-molding thereof into the body part 192 and the base part 193 of the container 190 the container is provided with a large printable area. The foregoing is merely a non-limiting embodiment and it should be recognized that the printing layer may have any configuration or location within the molded article 150.

The composition of the second thermoplastic 184 is not particularly limited. The thermoplastic may have a similar composition to the first thermoplastic such as, for example, polyethylene terephthalate, high-density polyethylene, or polypropylene. Other suitable thermoplastics include those that impart desirable properties such as, for example, improved barrier resistance to the migration of gas and moisture through a wall of the container. Accordingly, suitable thermoplastics may include, for example, nylon, PolyGlycolide Acid (PGA), and Ethylene Vinyl Alcohol (EVOH), amongst many others. Other suitable thermoplastics include those selected to be unstable in contact with water (i.e. soluble and/or degradable) such as, for example, a water-soluble polymer or a hydro-degradable polymer. Suitable water-soluble polymer may include ethylene vinyl alcohol, poly vinyl alcohol, poly ethylene glycol, dextrans, pullulan, poly vinyl pyrrolidone, poly acrylic acid, poly acrylamide, poly oxazoline, poly phosphates or cellulose. Likewise, suitable hydro-degradable polymers may include PGA, sugar/polysaccharide starch, polyglycolide, polycaprolactone, poly lactic acid, or polyhydroxyalkanoates. A technical effect of the foregoing may include improved recyclability of the container. With recycling of the container 190 the photo-sensitive marker 186 and the second thermoplastic 184 are rendered separable from the first thermoplastic 182 with a grinding of the container 190 into pieces and then processing them in a water solution to induce selective dissolution or degradation of the second thermoplastic 184.

To protect a second thermoplastic 184 that is unstable in contact with water from degrading prematurely, during the useful life of the container, the printing layer 156 may be encapsulated between skin layers of the first thermoplastic 182. More particularly, the printing layer 156 is encapsulated by the outer skin layer 154 and the inner skin layer 158 that are formed from the first thermoplastic 182.

To further improve the recyclability of the container 190 the first thermoplastic 182 may be devoid of the photo-sensitive marker 186. That is, with separation of the first and second thermoplastics in the recycling process, preferably with dissolution/hydrolyzing of the second thermoplastic 184, the first thermoplastic 182 is devoid of any photo-sensitive marker and thus can be readily cleaned and reused.

In other embodiments, not shown, the molded article and the resultant container may be configured to include multiple overlapping printing layers. The photo-sensitive properties of each printing layer may be the same or different. For example, the various printing layers may be configured to react to different wavelengths of laser light. Moreover, the various printing layers may have a different visual appearance (e.g. color) once developed with exposure to the corresponding wavelength of laser light. In a non-limiting example, not shown, the molded article may include five layers wherein the outermost skin layers are made from the first thermoplastic 182, whereas the remaining layers are printing layers, that is, a first printing layer that is sandwiched between an inner skin layer and a middle layer and a second printing layer that is sandwiched between an outer skin layer and the middle layer, and the middle layer itself are made from the second thermoplastic 184. The photo-sensitive markers in each printing layer may be developed, for example, to provide a different primary colors (i.e. first printing layer that develops to the color red, a second printing layer that develops to the color yellow, and a third printing layer that develops to the color blue), whereby a full array of colors may be developed by selectively triggering overlapping portions of the layers printing layers to develop complementary, or secondary, colors such as green, orange and purple. Those of skill in the art will recognize that other layer configurations are possible.

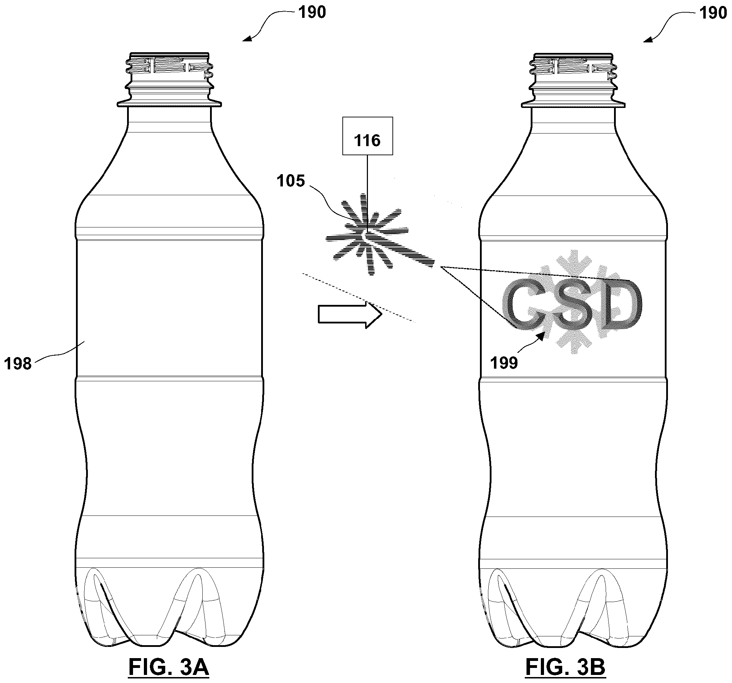

With reference to FIGS. 3A and 3B there is depicted a non-limiting embodiment of a printing sequence of the container 190. In particular, the container depicted in FIG. 3A is prior to printing whereas the container 190 show in FIG. 3B is post-printing. A method of printing involves focusing one or more beams of laser light of a selected properties (i.e. wavelength, intensity, etc.) onto selected portions of the printing layer within the container 190 to develop a change in visual appearance thereof. In this non-limiting embodiment, various decorative and functional markings 199 have been printed onto a panel area of the container 190 - specifically a brand image/logo and a product name.

To provide the required laser light at least one laser emitter 105 is provided. The laser emitter 105 is connected to a controller for controlling the operation thereof. Controllable properties of the laser emitter 105 may include, for example, those that are related to the positioning, triggering, modulation, amplification, attenuation of the laser light emitted therefrom. The controller may be common to the controller 116 of the molding machine 100 or it may be a separate controller.

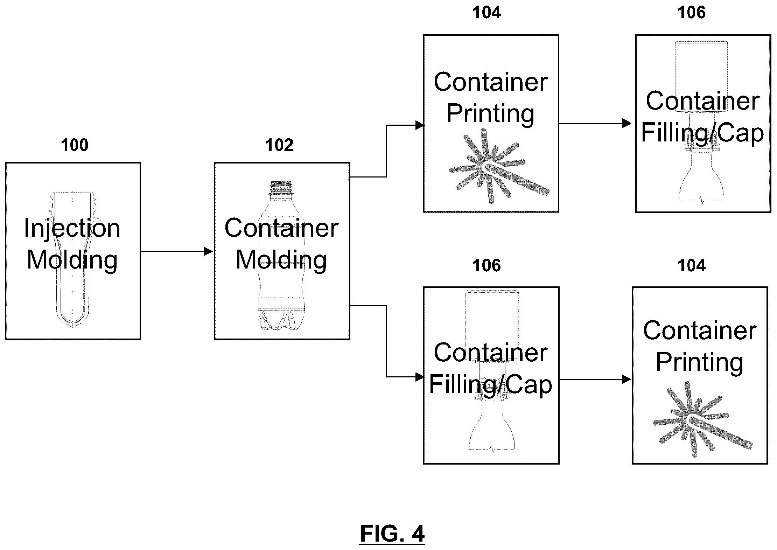

The location of the printing apparatus such as laser emitter 210 and any associated container handling equipment is not particularly limited. With reference to FIG. 4 there is depicted a non-limiting embodiment of a system having various operational elements for the molding, forming, filling/capping and printing of a completed container having packaged product therein. The operational elements may be tightly integrated as stations in a common work cell or they may otherwise be executed somewhat or entirely independently. In the depicted non-limiting embodiment, the operational elements include the molding system 100, a forming system 102, a printing system 104 and a filling and capping system 106. In a first operation the molding system 100 is operated to mold multi-layer molded articles, such as preforms, having a printing layer therein. In a following operation the multi-layer molded articles may be sent onto the forming system, such as a blow molding system, as necessary, for reshaping into a container. Subsequently, the containers can be printed upon prior to filling and capping or the other way around, that is, filled and capped and then printed upon.

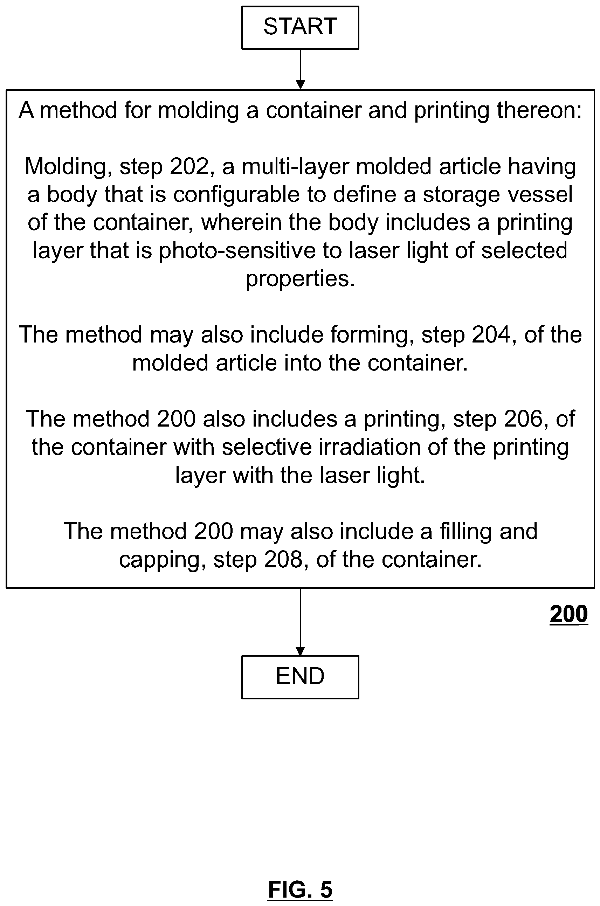

Having described various non-limiting embodiments of the molded article and related container formed therefrom the description shall now turn to a complimentary description of an underlying method for the forming and printing thereof. With reference to FIG. 5 there is depicted a simplified flow chart of a method 200. Broadly speaking, the method 200 includes molding, step 202, of a multi-layer molded article having a body that is configurable to define a storage vessel of the container, wherein the body is formed from a first thermoplastic and includes a printing layer of a second thermoplastic that is photo-sensitive to laser light of selected properties (i.e. wavelength, intensity, etc.).

The molding operation 202 may be performed by various means such, for example, the injection molding system 100 (FIG. 1) described previously, or alternatively molding systems (not shown) that are configured for extrusion molding, compression molding, injection-compression molding, blow-trim molding and the like.

In accordance with a specific non-limiting example, the molding operation 202 includes injection molding the molded article 150 having a tubular body that includes an open end and a closed end, the body having a neck part 191 at the open end, a base part 193 at the closed end and a body part 192 defined therebetween.

The molding operation 202 may include injecting a first thermoplastic 182 into a molding cavity 168 that is defined by an insert stack 166 in a mold 160 that is closed and clamped to form one or more of the neck portion 151, the base portion 153 and the body portion 152 at least in part. Furthermore the method 200 may include a step of injecting a second thermoplastic 184 into the molding cavity 168, wherein the second thermoplastic 184 is photo-sensitive to laser light of selected properties (i.e. wavelength, intensity, etc.) to form a printing layer 156 along at least a part of one or more of the neck portion 151, the base portion 153 and the body portion 152. In the second injection step a photo-sensitive marker 186 is added into the second thermoplastic 182. In the non-limiting example provided herein the photo-sensitive marker is dispersed with the second thermoplastic by the blender/dosing device 142 that is disposed at the inlet to the auxiliary injection unit 140 (reference FIG. 1).

The method 200 may also include a forming, step 204, of the molded article into the container. The forming operation 204 may be performed by various means such, for example, blow molding or liquid molding. As mentioned previously, some molded articles form completed containers upon molding and do not require any subsequent step of forming/blow molding thereof.

In accordance with a specific non-limiting example, the forming operation 204 includes blow molding the body portion 152 and the base portion 153 to provide a body part 192 and a base part 193 of the container 190 respectively, wherein the neck portion 151 of the molded article 150 is configured to define a neck part 191 of the container.

The method 200 also includes a printing, step 206, of the container. The printing step may be performed in the printing system 104 with selective irradiation of the printing layer 196 with the laser light. Alternatively, the elements of the printing system 104, namely the laser emitter 105, may be integrated into other operational elements of the system.

Lastly, the method 200 may also include a filling and capping, step 208, of the container. The filling and capping step may be performed in the filling and capping system 106.

The order of operation of the steps after molding is not particularly limited. The printing can be performed at any stage after the molding of the container.

As mentioned previously, in accordance with a specific non-limiting example, the second thermoplastic material 184 is selected to be unstable in contact with water. The foregoing may facilitate recycling of the container. A container recycling method may include grinding the container 190 into pieces, processing the pieces in a water solution to induce dissolution or degradation of the second thermoplastic 184 and separating the photo-sensitive marker and degradation products of the second thermoplastic 184 from the first thermoplastic 182.

To perform such methods using automated machinery a non-transitory computer readable medium 117 may be provided, the non-transitory computer readable medium storing computer executable instructions, which computer executable instructions when executed can cause a controller 116 of a molding machine 100 or other controller to execute the method.

Having described various non-limiting embodiments of structure and steps for the molding of molded articles (e.g. preform) and containers re-moldable therefrom it is worthwhile noting that the shape and configuration thereof is not particularly limited. More generally, a preform has any intermediate shape suitable to form a container (this would include discs, typical preforms of any shape, extruded tubes etc.). For example, the body of the molded article (e.g. preform) may be hollow and have one or more surface that is, for example, cylindrical, tubular, conical, ovoid, rectangular. As a further example, the body may define a solid block (i.e. not hollow) such as a disc-shape, wherein the block is re-moldable to define the container. The foregoing will be further illustrated with the additional non-limiting embodiments that follow.

Likewise, the container is any shaped, formed, or assembled 3-dimensional structure suitable to contain a gas, liquid, or solid media or a combination thereof. For example, the container may have a typical hollow cylindrical shape. Alternatively, the container may have a more intricate shape such as those typically used for packaging personal care products, specific examples include containers that are oval, have an offset neck or that have a square shape.

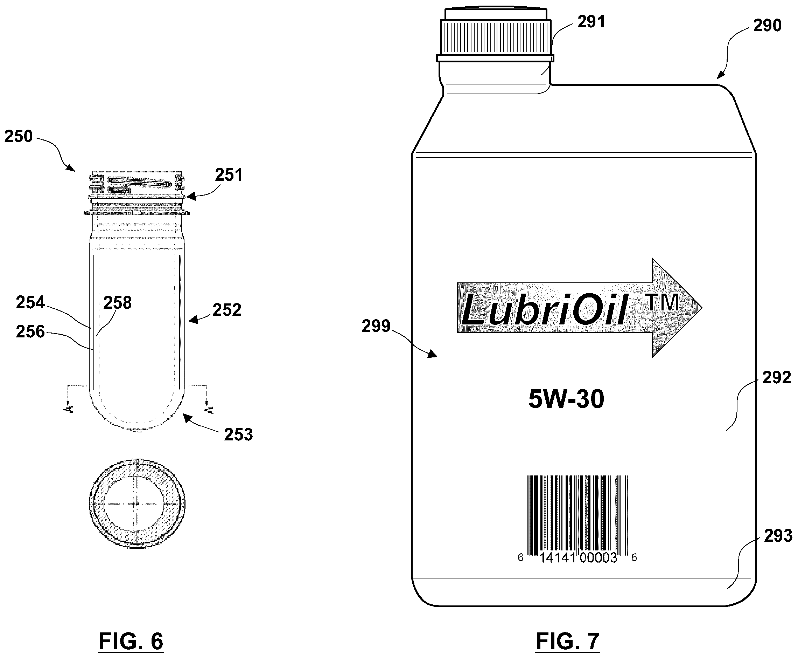

With reference to FIGS. 6 and 7 there is depicted another non-limiting embodiment of a molded article 250 (e.g. preform) that is configured for remolding into a container 290 having an offset neck 291. The molded article 250 broadly includes a body configurable to define a storage vessel of the container 290. More specifically, the body is a hollow body having an open end and a closed end, the body having a neck portion 251 at the open end, a base portion 253 at the closed end and a body portion 252 defined therebetween. The surfaces that define the body portion 252 are non-concentric, non-uniform cylinders, whereby the thickness of the wall of the body portion 252 defined therebetween varies around a circumference thereof. A technical effect of the foregoing non-uniform distribution of thermoplastic in the molded article may include improved wall thickness uniformity in the corresponding body portion 252 and base portion 253 of the container 290 upon the re-molding thereof. The molded article 250 may have a multilayer structure as shown wherein a printing layer 256 is encapsulated by an outer skin layer 254 and an inner skin layer 258. Alternative embodiments of the molded article 250 are contemplated having different multilayer structure.

The non-limiting embodiment of the container 290 further incudes various decorative and functional markings 299 printed in the printing layer thereon - such as, for example, a brand image/logo, a product name and a UPC code.

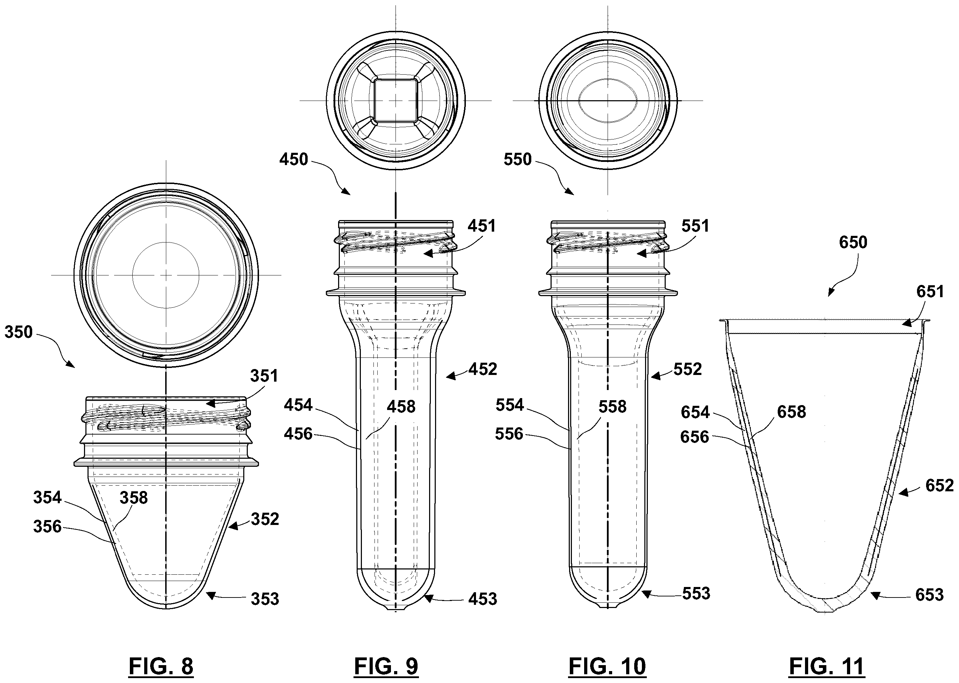

With reference to FIG. 8 there is depicted another non-limiting embodiment of a molded article 350 (e.g. preform) that is configured for remolding into a container (not shown). The molded article 350 broadly includes a body configurable to define a storage vessel of the container. More specifically, the body is a hollow body having an open end and a closed end, the body having a neck portion 251 at the open end, a base portion 353 at the closed end and a body portion 352 defined therebetween. The neck portion 351 is characterized in that it is disproportionately wide having a so-called 'wide mouth'. The surfaces that define the body portion 352 are conical. The inner and outer conical surfaces of the tubular part are concentric, whereby the thickness of the wall of the body portion 352 defined therebetween is generally uniform around a circumference thereof. That being said in another non-limiting embodiment the conical surfaces may be non-concentric so as to vary the wall thickness in the body portion similar to the preceding embodiment. The molded article 350 has a multilayer structure, wherein a second thermoplastic provides a printing layer 356 that is encapsulated by an outer skin layer 354 and an inner skin layer 358 that are formed from the first thermoplastic.

With reference to FIG. 9 there is depicted another non-limiting embodiment of a molded article 450 (e.g. preform) that is configured for remolding into a non-round container (not shown). The molded article 450 broadly includes a body configurable to define a storage vessel of the container. More specifically, the body is a hollow body having an open end and a closed end, the body having a neck portion 451 at the open end, a base portion 453 at the closed end and a body portion 452 defined therebetween. The surfaces that define the body portion 452 have different configurations wherein the outer surface is generally cylindrical and the inner surface is generally rectangular, whereby the thickness of the wall of the body portion 452 defined therebetween varies around a circumference thereof. A technical effect of the foregoing non-uniform distribution of thermoplastic in the molded article may define corresponding structural features in the corresponding body portion and base portion of the container (not shown) upon the re-molding thereof. The molded article 450 has a multilayer structure as shown wherein a second thermoplastic provides a printing layer 456 that is encapsulated by an outer skin layer 454 and an inner skin layer 458 that are formed from the first thermoplastic.

With reference to FIG. 10 there is depicted another non-limiting embodiment of a molded article 550 (e.g. preform) that is configured for remolding into a container (not shown). The molded article 550 broadly includes a body configurable to define a storage vessel of the container. More specifically, the body is a hollow body having an open end and a closed end, the body having a neck portion 551 at the open end, a base portion 553 at the closed end and a body portion 552 defined therebetween. The surfaces that define the body portion 552 have different configurations wherein the outer surface is generally cylindrical and the inner surface is generally ovoid, whereby the thickness of the wall of the body portion 552 defined therebetween varies around a circumference thereof. A technical effect of the foregoing non-uniform distribution of thermoplastic in the molded article may include a generally uniform wall thickness in an oval shaped container re-molded therefrom. The molded article 550 has a multilayer structure as shown wherein a second thermoplastic provides a printing layer 556 that is encapsulated by an outer skin layer 554 and an inner skin layer 558 that are formed from the first thermoplastic.

While many more non-limiting embodiments of the molded article (e.g. preform) are contemplated it will suffice to close with one additional embodiment as shown with reference to FIG. 11 there is depicted another non-limiting embodiment of a molded article 650 (e.g. preform) that is configured for remolding into a container (not shown). The molded article 650 broadly includes a body configurable to define a storage vessel of the container (not shown). More specifically, the body is a hollow body having an open end 651 and a base portion 653 at a closed end and a body portion 652 defined therebetween. In contrast with the preceding embodiments the open end 651 does not include a neck finish in the traditional sense for releasably receiving a closure. Rather, the open end 651 is configured for receiving a cap thereon. Also of note, the surfaces that define the body portion 652 are both conical. The inner and outer conical surfaces of the body portion 652 are concentric, whereby the thickness of the wall of the body defined therebetween is generally uniform around a circumference thereof. That being said in another non-limiting embodiment the conical surfaces may be non-concentric so as to vary the wall thickness in the body portion similar to the preceding embodiment. As shown, the molded article 650 has a multilayer structure as shown wherein a second thermoplastic provides a printing layer 656 that is encapsulated by an outer skin layer 654 and an inner skin layer 658 that are formed from the first thermoplastic.

Various embodiments having been thus described in detail by way of example, it will be apparent to those skilled in the art that variations and modifications may be made without departing from the invention. The invention includes all such variations and modifications as fall within the scope of the appended claims.

## Claims

1. A molded article (150, 250, 350, 450, 550, 650) for providing a container (190, 290), the molded article comprising:
a body configurable to define a storage vessel of the container (190, 290);
wherein the body includes:
at least one layer of a first thermoplastic (182); and
a printing layer (156, 256, 356, 456, 556, 656) that includes a second thermoplastic (184), the printing layer (156, 256, 356, 456, 556, 656) being photo-sensitive to laser light of selected properties to change a visual appearance thereof, whereby the container (190, 290) may be printed upon.

2. The molded article (150, 250, 350, 450, 550, 650) of claim 1, wherein the body is a preform at least portion of which is re-moldable to define the container (190, 290).

3. The molded article (150) of claim 1, wherein the printing layer (156) is encapsulated by an outer skin layer (154) and an inner skin layer (158), wherein the outer skin layer (154) and the inner skin layer (158) are formed from the first thermoplastic (182) and the printing layer (156) is formed from the second thermoplastic (184).

4. The molded article (150) of claim 1, wherein the first thermoplastic (182) is one of polyethylene terephthalate, high-density polyethylene, or polypropylene.

5. The molded article (150) of claim 1, wherein the second thermoplastic (184) is one of a water-soluble polymer or a hydro-degradable polymer.

6. The molded article (150) of claim 1, further comprises multiple overlapping printing layers.

7. The molded article (150) of claim 6, wherein the printing layers are configured to react to different wavelengths of laser light.

8. The molded article (150) of claim 7, wherein photo-sensitive markers in each printing layer develop, on exposure to the corresponding wavelength of laser light, different primary colors, whereby a full array of colors may be developed by selectively triggering overlapping portions of the layers printing layers.

9. A container (190, 290), comprising:
a body configured to define a storage vessel;
wherein the body includes:
at least one layer of a first thermoplastic (182); and
a printing layer (196) that includes a second thermoplastic (184), the printing layer (196) being photo-sensitive to laser light of selected properties to change a visual appearance thereof, whereby the container (190, 290) may be printed upon.

10. The container (190, 290) of claim 9, wherein body includes a neck part (191, 291) at an open end, a base part (193, 293) at a closed end and a body part (192, 291) defined therebetween.

11. The container (190, 290) of claim 9, wherein the printing layer (196) is encapsulated by an outer skin layer (194) and an inner skin layer (198), wherein the outer skin layer (194) and the inner skin layer (198) are formed from the first thermoplastic (182) and the printing layer (196) is formed from the second thermoplastic (184).

12. The container (190, 290) of claim 9, wherein the first thermoplastic (182) is one of polyethylene terephthalate, high-density polyethylene, or polypropylene.

13. The container (190, 290) of claim 9, wherein the second thermoplastic (184) is one of a water-soluble polymer or a hydro-degradable polymer.

14. The container (190, 290) of claim 9, further comprises multiple overlapping printing layers.

15. The container (190, 290) of claim 14, wherein the printing layers are configured to react to different wavelengths of laser light.

16. The container (190, 290) of claim 15, wherein photo-sensitive markers in each printing layer develop, on exposure to the corresponding wavelength of laser light, different primary colors, whereby a full array of colors may be developed by selectively triggering overlapping portions of the layers printing layers.

17. A method (200) for molding a container (190, 290) and printing thereon, comprising:
molding (202) a molded article having a body that is configurable to define a storage vessel of the container, wherein the body includes at least one layer of a first thermoplastic (182) and a printing layer (196) that includes a second thermoplastic (184), the printing layer (196) being photo-sensitive to laser light of selected properties to change a visual appearance thereof; and
printing (206) on the container with selective irradiation of the printing layer (196) with the laser light.

18. The method (200) of claim 17, further comprising:
forming (204) of the molded article into the container with remolding thereof at least in part.

19. The method (200) of claim 17, further comprising:
filling and capping (208), wherein the printing (206) may be performed before or after the filling and capping of the container.

20. The method (200) of claim 17, wherein:
The molding of the molded article includes molding multiple overlapping printing layers therein.

21. The method (200) of claim 20, wherein the printing layers are configured to react to different wavelengths of laser light.

22. The method (200) of claim 21, wherein the printing of the container includes selectively irradiating the printing layers with the corresponding wavelength of laser light to generate different primary colors, whereby a full array of colors may be developed by selectively triggering overlapping portions of the layers printing layers.

23. A non-transitory computer readable medium (117), the non-transitory computer readable medium storing computer executable instructions, which computer executable instructions when executed can cause a controller (116) to execute the method (200) according to any one of claims 17 to 22.

## Patentansprüche

1. Formgegenstand (150, 250, 350, 450, 550, 650) zur Bereitstellung eines Behälters (190, 290), wobei der Formgegenstand umfasst:
einen Körper, der so ausgestaltet werden kann, dass er ein Speichergefäß des Behälters (190, 290) definiert;
wobei der Körper beinhaltet:
zumindest eine Schicht eines ersten Thermoplasts (182); und
eine Druckschicht (156, 256, 356, 456, 556, 656), die einen zweiten Thermoplast (184) beinhaltet, wobei die Druckschicht (156, 256, 356, 456, 556, 656) lichtempfindlich auf Laserlicht mit geeigneten Eigenschaften ist, um eine visuelle Erscheinung davon zu verändern, wodurch der Behälter (190, 290) bedruckt werden kann.

2. Formgegenstand (150, 250, 350, 450, 550, 650) nach Anspruch 1, wobei der Körper ein Vorformling ist, von dem zumindest ein Abschnitt umformbar ist, um den Behälter (190, 290) zu definieren.

3. Formgegenstand (150) nach Anspruch 1, wobei die Druckschicht (156) durch eine äußere Hautschicht (154) und eine innere Hautschicht (158) eingekapselt ist, wobei die äußere Hautschicht (154) und die innere Hautschicht (158) aus dem ersten Thermoplast (182) gebildet ist und die Druckschicht (156) aus dem zweiten Thermoplast (184) gebildet ist.

4. Formgegenstand (150) nach Anspruch 1, wobei der erste Thermoplast (182) eines von Polyethylenterephthalat, Polyethylen hoher Dichte oder Polypropylen ist.

5. Formgegenstand (150) nach Anspruch 1, wobei der zweite Thermoplast (184) eines von einem wasserlöslichen Polymer oder einem wasserabbaubaren Polymer ist.

6. Formgegenstand (150) nach Anspruch 1, ferner umfassend mehrere sich überlappende Druckschichten.

7. Formgegenstand (150) nach Anspruch 6, wobei die Druckschichten dazu ausgestaltet sind, auf unterschiedliche Wellenlängen von Laserlicht zu reagieren.

8. Formgegenstand (150) nach Anspruch 7, wobei lichtempfindliche Markierungen in jeder Druckschicht bei Exposition gegenüber der entsprechenden Wellenlänge von Laserlicht verschiedene Primärfarben entwickeln, wodurch eine vollständige Palette von Farben entwickelt werden kann, indem selektiv sich überlappende Abschnitte von Druckschichten aktiviert werden.

9. Behälter (190, 290), umfassend:
einen Körper, der dazu ausgestaltet ist, ein Speichergefäß zu definieren;
wobei der Körper beinhaltet:
zumindest eine Schicht eines ersten Thermoplasts (182); und
eine Druckschicht (196), die einen zweiten Thermoplast (184) beinhaltet, wobei die Druckschicht (196) lichtempfindlich auf Laserlicht mit geeigneten Eigenschaften ist, um eine visuelle Erscheinung davon zu verändern, wodurch der Behälter (190, 290) bedruckt werden kann.

10. Behälter (190, 290) nach Anspruch 9, wobei der Körper einen Halsabschnitt (191, 291) an einem offenen Ende, einen Basisabschnitt (193, 293) an einem geschlossenen Ende und einen Körperabschnitt (192, 291) umfasst, der dazwischen definiert ist.

11. Behälter (190, 290) nach Anspruch 9, wobei die Druckschicht (196) durch eine äußere Hautschicht (194) und eine innere Hautschicht (198) eingekapselt ist, wobei die äußere Hautschicht (194) und die innere Hautschicht (198) aus dem ersten Thermoplast (182) gebildet ist und die Druckschicht (196) aus dem zweiten Thermoplast (184) gebildet ist.

12. Behälter (190, 290) nach Anspruch 9, wobei der erste Thermoplast (182) eines von Polyethylenterephthalat, Polyethylen hoher Dichte oder Polypropylen ist.

13. Behälter (190, 290) nach Anspruch 9, wobei der zweite Thermoplast (184) eines von einem wasserlöslichen Polymer oder einem wasserabbaubaren Polymer ist.

14. Behälter (190, 290) nach Anspruch 9, ferner umfassend mehrere sich überlappende Druckschichten.

15. Behälter (190, 290) nach Anspruch 14, wobei die Druckschichten dazu ausgestaltet sind, auf unterschiedliche Wellenlängen von Laserlicht zu reagieren.

16. Behälter (190, 290) nach Anspruch 15, wobei lichtempfindliche Markierungen in jeder Druckschicht bei Exposition gegenüber der entsprechenden Wellenlänge von Laserlicht verschiedene Primärfarben entwickeln, wodurch eine vollständige Palette von Farben entwickelt werden kann, indem selektiv sich überlappende Abschnitte von Druckschichten aktiviert werden.

17. Verfahren (200) zum Formen eines Behälters (190, 290) und Bedrucken desselben, umfassend:
Formen (202) eines Formgegenstands, der einen Körper aufweist, der so ausgestaltet werden kann, dass er ein Speichergefäß des Behälters definiert, wobei der Körper zumindest eine Schicht eines ersten Thermoplasts (182) und eine Druckschicht (196) beinhaltet, die einen zweiten Thermoplast (184) beinhaltet, wobei die Druckschicht (196) lichtempfindlich auf Laserlicht mit ausgewählten Eigenschaften ist, um eine visuelle Erscheinung davon zu verändern; und
Drucken (206) auf den Behälter mittels selektiver Bestrahlung der Druckschicht (196) mit dem Laserlicht.

18. Verfahren (200) nach Anspruch 17, ferner umfassend:
Formen (204) des Formartikels zu einem Behälter durch zumindest teilweises Umformen desselben.

19. Verfahren (200) nach Anspruch 17, ferner umfassend; Füllen und Verschließen (208), wobei das Bedrucken (206) vor oder nach dem Befüllen und Verschließen des Behälters erfolgen kann.

20. Verfahren (200) nach Anspruch 17, wobei:
das Formen des Formartikels das Formen von mehreren sich überlappenden Druckschichten darin beinhaltet.

21. Verfahren (200) nach Anspruch 20, wobei die Druckschichten dazu ausgestaltet sind, auf unterschiedliche Wellenlängen von Laserlicht zu reagieren.

22. Verfahren (200) nach Anspruch 21, wobei das Bedrucken des Behälters das selektive Bestrahlen der Druckschichten mit der entsprechenden Wellenlänge von Laserlicht zur Erzeugung verschiedener Primärfarben beinhaltet, wodurch eine vollständige Palette von Farben entwickelt werden kann, indem selektiv sich überlappende Abschnitte von Druckschichten aktiviert werden.

23. Nichtflüchtiges computerlesbares Medium (117), wobei das nichtflüchtige computerlesbare Medium computerausführbare Anweisungen speichert, die, wenn sie ausgeführt werden, ein Steuergerät (116) veranlassen können, das Verfahren (200) nach einem der Ansprüche 17 bis 22 auszuführen.

## Revendications

1. Article moulé (150, 250, 350, 450, 550, 650) pour fournir un récipient (190, 290), l'article moulé comprenant :
un corps configurable pour définir une cuve de stockage du récipient (190, 290) ;
dans lequel le corps comporte :
au moins une couche d'un premier thermoplastique (182) ; et
une couche d'impression (156, 256, 356, 456, 556, 656) qui comporte un deuxième thermoplastique (184), la couche d'impression (156, 256, 356, 456, 556, 656) étant photosensible à la lumière laser de propriétés sélectionnées pour changer son aspect visuel, moyennant quoi le récipient (190, 290) peut recevoir une impression.

2. Article moulé (150, 250, 350, 450, 550, 650) de la revendication 1, dans lequel le corps est une préforme dont au moins une partie est remoulable pour définir le récipient (190, 290).

3. Article moulé (150) de la revendication 1, dans lequel la couche d'impression (156) est encapsulée par une couche de peau externe (154) et une couche de peau interne (158), dans lequel la couche de peau externe (154) et la couche de peau interne (158) sont formées à partir du premier thermoplastique (182) et la couche d'impression (156) est formée à partir du deuxième thermoplastique (184) .

4. Article moulé (150) de la revendication 1, dans lequel le premier thermoplastique (182) est l'un parmi le polyéthylène téréphtalate, le polyéthylène haute densité ou le polypropylène.

5. Article moulé (150) de la revendication 1, dans lequel le deuxième thermoplastique (184) est l'un parmi un polymère soluble dans l'eau ou un polymère hydrodégradable.

6. Article moulé (150) de la revendication 1, comprenant en outre de multiples couches d'impression se chevauchant.

7. Article moulé (150) de la revendication 6, dans lequel les couches d'impression sont configurées pour réagir à différentes longueurs d'onde de lumière laser.

8. Article moulé (150) de la revendication 7, dans lequel des marqueurs photosensibles dans chaque couche d'impression développent, lors de l'exposition à la longueur d'onde correspondante de lumière laser, différentes couleurs primaires, moyennant quoi une gamme complète de couleurs peut être développée en déclenchant sélectivement des parties chevauchantes des couches d'impression.

9. Récipient (190, 290), comprenant :
un corps configuré pour définir une cuve de stockage ;
dans lequel le corps comporte :
au moins une couche d'un premier thermoplastique (182) ; et
une couche d'impression (196) qui comporte un deuxième thermoplastique (184), la couche d'impression (196) étant photosensible à la lumière laser de propriétés sélectionnées pour changer son aspect visuel, moyennant quoi le récipient (190, 290) peut recevoir une impression.

10. Récipient (190, 290) de la revendication 9, dans lequel le corps comprend une partie de col (191, 291) au niveau d'une extrémité ouverte, une partie de base (193, 293) au niveau d'une extrémité fermée et une partie de corps (192, 291) définie entre elles.

11. Récipient (190, 290) de la revendication 9, dans lequel la couche d'impression (196) est encapsulée par une couche de peau externe (194) et une couche de peau interne (198), dans lequel la couche de peau externe (194) et la couche de peau interne (198) sont formées à partir du premier thermoplastique (182) et la couche d'impression (196) est formée à partir du deuxième thermoplastique (184) .

12. Récipient (190, 290) de la revendication 9, dans lequel le premier thermoplastique (182) est l'un parmi le polyéthylène téréphtalate, le polyéthylène haute densité ou le polypropylène.

13. Récipient (190, 290) de la revendication 9, dans lequel le deuxième thermoplastique (184) est l'un parmi un polymère soluble dans l'eau ou un polymère hydrodégradable.

14. Récipient (190, 290) de la revendication 9, comprenant en outre de multiples couches d'impression se chevauchant.

15. Récipient (190, 290) de la revendication 14, dans lequel les couches d'impression sont configurées pour réagir à différentes longueurs d'onde de lumière laser.

16. Récipient (190, 290) de la revendication 15, dans lequel des marqueurs photosensibles dans chaque couche d'impression développent, lors de l'exposition à la longueur d'onde correspondante de lumière laser, différentes couleurs primaires, moyennant quoi une gamme complète de couleurs peut être développée en déclenchant sélectivement des parties chevauchantes des couches d'impression.

17. Procédé (200) de moulage d'un récipient (190, 290) et d'impression sur celui-ci, comprenant :
le moulage (202) d'un article moulé ayant un corps qui est configurable pour définir une cuve de stockage du récipient, dans lequel le corps comporte au moins une couche d'un premier thermoplastique (182) et une couche d'impression (196) qui comporte un deuxième thermoplastique (184), la couche d'impression (196) étant photosensible à la lumière laser de propriétés sélectionnées pour changer son aspect visuel ; et
l'impression (206) sur le récipient avec irradiation sélective de la couche d'impression (196) avec la lumière laser.

18. Procédé (200) de la revendication 17, comprenant en outre :
la formation (204) de l'article moulé en un récipient avec remoulage de celui-ci au moins en partie.

19. Procédé (200) de la revendication 17, comprenant en outre :
le remplissage et le bouchage (208), dans lequel l'impression (206) peut être effectuée avant ou après le remplissage et le bouchage du récipient.

20. Procédé (200) de la revendication 17, dans lequel :
le moulage de l'article moulé comporte le moulage de multiples couches d'impression se chevauchant dans celui-ci.

21. Procédé (200) de la revendication 20, dans lequel les couches d'impression sont configurées pour réagir à différentes longueurs d'onde de lumière laser.

22. Procédé (200) de la revendication 21, dans lequel l'impression du récipient comporte l'irradiation sélective des couches d'impression avec la longueur d'onde correspondante de lumière laser pour générer différentes couleurs primaires, moyennant quoi une gamme complète de couleurs peut être développée en déclenchant sélectivement des parties chevauchantes des couches d'impression.

23. Support non transitoire lisible par ordinateur (117), le support non transitoire lisible par ordinateur stockant des instructions exécutables par ordinateur, lesquelles instructions exécutables par ordinateur lorsqu'elles sont exécutées peuvent amener une unité de commande (116) à exécuter le procédé (200) selon l'une quelconque des revendications 17 à 22.
